# FASCICULE DE BREVET EUROPEEN

(11) **EP 0 799 730 B1**
(45) Date de publication et mention de la délivrance du brevet: **10.01.2001**
(21) Numéro de dépôt: 97400728.8
(22) Date de dépôt: 28.03.1997
(51) Int. Cl.: B60D 1/48, B60D 1/54, B60D 1/145, B60D 1/167, B60D 1/46

(54) **Système de remorquage pour au moins un véhicule tracteur et un véhicule tracté et véhicule automobile pouvant être utilisé dans ce système**
Abschleppsystem für mindestens ein ziehendes und ein gezogenes Fahrzeug und ein Kraftfahrzeug geeignet zum Gebrauch in einem solchem System
Towing system for at least a towing vehicle and towed vehicle and motor vehicle capable of being used in such a system

(30) Priorité: 04.04.1996 FR 9604256
(43) Date de publication de la demande: 08.10.1997
(73) Titulaire: AUTOMOBILES PEUGEOT, 75116 Paris (FR); AUTOMOBILES CITROEN, 92200 Neuilly-sur-Seine (FR)
(72) Inventeur: Maret, Jean-Claude, 91380 Chilly Mazarin (FR); Chery, François, 92400 Courbevoie (FR); Andriussi, François, 33370 Fargues Saint-Hilaire (FR)
(74) Mandataire: Beauchamps, Georges

(56) Documents cités:
- EP-A- 0 049 637
- DE-A- 2 747 289
- DE-U- 1 771 844
- FR-A- 2 533 172
- GB-A- 2 072 597
- US-A- 1 422 928
- US-A- 1 563 860
- US-A- 2 411 009
- US-A- 3 572 765
- US-A- 3 794 355

## Description

La présente invention concerne un système de remorquage pour au moins un véhicule tracteur et un véhicule tracté destinés notamment à circuler sur la voie publique et un véhicule automobile pouvant être utilisé dans un tel système de remorquage.

On connaît déjà des trains de wagonnets d'au moins deux unités destinés à circuler sur les quais des gares, et comportant entre deux wagonnets successifs un attelage symétrique reliant les essieux arrière et avant respectivement de ces deux wagonnets, ce qui permet à chaque unité de suivre exactement la trajectoire de celle qui la précède.

Toutefois, ce système de remorquage connu ne peut s'appliquer qu'aux véhicules qui sont toujours remorqués, et ne convient donc pas aux véhicules automobiles.

On connaît également un autre système de remorquage dans les véhicules poids-lourd équipés d'une ou plusieurs remorques.

Lorsqu'une seule remorque est attelée au véhicule poids-lourd, celle-ci est équipée d'un essieu arrière à géométrie fixe, dont la trajectoire s'écarte déjà très sensiblement de celle du véhicule tracteur.

Lorsque le véhicule poids-lourd traîne deux ou plus remorques, certaines manoeuvres de changement de direction ne peuvent se faire que sur des voies de largeur considérable, en raison des écarts cumulés de trajectoire entre les différentes unités tractées.

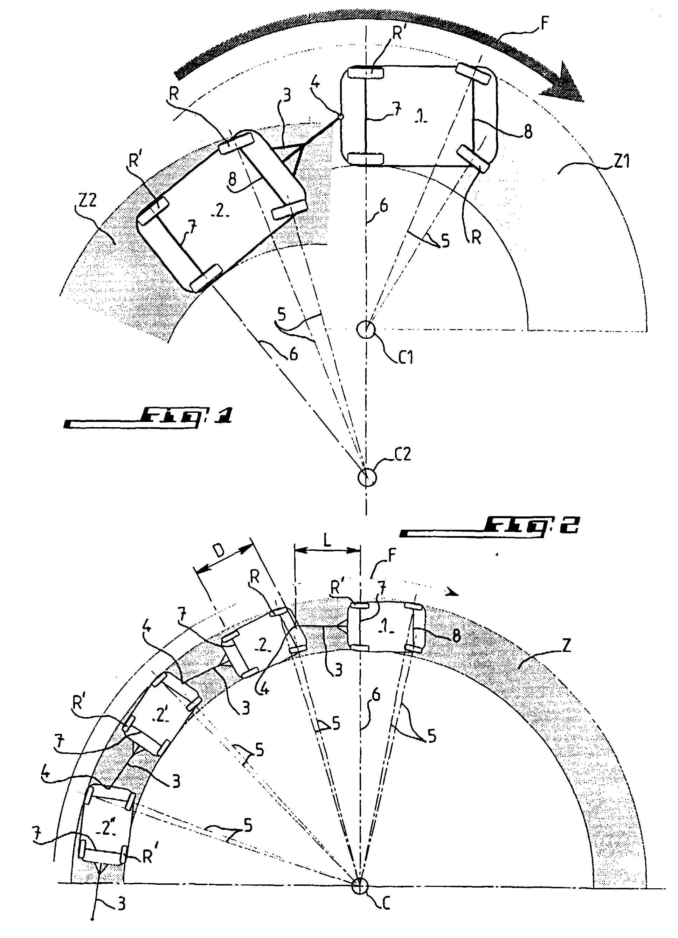

On a représenté schématiquement sur la figure 1 des dessins annexés une épure de direction suivie par deux véhicules routiers respectivement tracteur 1 et tracté 2 d'un système de remorquage connu.

On voit sur cette figure que les deux véhicules sont attelés ensemble par un timon 3 attaché à l'avant du véhicule tracté 2 venant s'accoupler de manière articulée sur une broche d'attelage 4 fixée à l'arrière du véhicule tracteur 1.

Pour assurer un roulage sans dérapage ni glissement des roues avant R ou arrière R', on sait qu'il faut adopter une cinématique telle que le prolongement des axes 5 des roues directrices avant concoure avec le prolongement de l'axe 6 de l'essieu arrière 7 du même véhicule en un même centre de rotation C1, C2.

On a indiqué sur la figure 1 par des zones ombrées plus claire Z1 et plus sombre Z2 les trajectoires respectives du véhicule tracteur 1 et du véhicule tracté 2 lorsque le système de remorquage tourne dans la direction indiquée par la flèche F.

On remarquera que les roues directrices avant droite et gauche suivent des trajectoires de rayon supérieur à celui des trajectoires des roues arrière correspondantes.

Lorsque le système de remorquage est en mouvement, on voit clairement sur la figure 1 que le véhicule tracté 2 suit automatiquement une trajectoire nettement déportée vers l'intérieur du virage, dont le centre de rotation C2 est nettement décalé du centre de rotation C1 du véhicule tracteur 1.

On comprend ainsi qu'un tel système de remorquage nécessite un espace de manoeuvre considérable, d'autant plus que le nombre de véhicules tractés augmente, ce qui le rend peu adapté aux conditions de circulation routière et urbaine.

DE-A-27 47 289 décrit un système de remorquage comprenant les caractéristiques du préambule de la revendication 1.

Cependant ce système connu présente les mêmes inconvénients que ceux du système de la figure 1.

La présente invention a donc pour but d'éliminer les inconvénients précités et de proposer un système de remorquage destiné notamment à circuler sur la voie publique sans nécessiter des espaces de manoeuvre considérables lors des changements de direction.

A cet effet, la présente invention a pour objet un système de remorquage pour au moins un véhicule tracteur et au moins deux véhicules tractés, comprenant les caractéristiques énoncées dans la partie caractérisante de la revendication 1.

Selon une caractéristique particulière de l'invention, le timon est déplaçable par rapport à son véhicule porteur entre une position escamotée de repos dans le véhicule et une position extérieurement saillante vers l'arrière pour le remorquage.

Le timon étant escamotable, les véhicules automobiles pourront aussi bien être utilisés pour le convoyage occasionnel dans un système de remorquage que pour la circulation autonome classique dans les périodes d'utilisation normale.

Dans un premier mode de réalisation, le timon est une perche rigide rectiligne coulissant dans un logement correspondant sous le plancher du véhicule.

On peut prévoir cette perche télescopique.

Dans un autre mode de réalisation, le timon est un polygone déformable à au moins quatre côtés, et pouvant prendre une position aplatie transversale à l'arrière de son véhicule porteur au repos, et une position déployée longitudinale pour le remorquage.

Dans encore un autre mode de réalisation, le timon comporte au moins une roue autodirectrice folle et destinée à rouler sur le sol.

Dans ce cas, le timon peut être équipé d'un moyen de soulèvement pour soulever les roues avant du véhicule tracté, ce moyen étant constitué d'un bras basculant autour d'un axe horizontal tranversal et dont l'extrémité libre vient s'accoupler de manière articulée sur la broche d'attelage précitée.

On peut également prévoir que l'axe autodirecteur de chaque roue folle soit solidaire du bras basculant précité.

On peut également prévoir des moyens de réglage de la longueur active du timon, c'est-à-dire de la longueur entre son extrémité libre et l'essieu arrière, et des moyens de verrouillage du timon respectivement en position de repos et de remorquage, ainsi que des moyens de déplacement du timon entre ces positions, tels que par exemple un vérin mécanique, électrique, hydraulique ou pneumatique, à commande manuelle ou automatique.

Selon une autre caractéristique de l'invention, le timon est déplaçable verticalement par rapport à la broche d'attelage correspondante pour permettre également leur accrochage mutuel.

Cette caractéristique est particulièrement avantageuse lorsqu'elle permet le soulèvement des roues avant du véhicule tracté de façon qu'elles ne touchent plus le sol, car le remorquage pourra alors se faire sans avoir à assurer le braquage des roues avant du véhicule tracté, ce qui permet à un seul conducteur dans le véhicule tracteur de convoyer l'ensemble du train ainsi constitué.

On peut également prévoir que chaque véhicule tracteur comporte à l'avant une broche d'attelage et chaque véhicule tracté comporte à l'arrière un timon d'attelage, de façon que chaque véhicule puisse être aussi bien tracté qu'utilisé comme tracteur.

Lorsque les véhicules tractés sont soulevés, on peut prévoir que le véhicule tracteur de tête ait une masse supérieure ou soit lesté, à l'avant de ce dernier, pour assurer une adhérence suffisante des roues directrices avant du véhicule tracteur de tête sur le sol, même en l'absence de la masse du conducteur, pour permettre de bonnes conditions dynamiques de circulation, notamment lorsque les véhicules du système de remorquage ont sensiblement la même masse et/ou la même répartition de masse.

Dans le cas de voitures à traction électrique, le lest peut consister en des batteries d'accumulateur électrique supplémentaires.

Lorsque les véhicules du système de remorquage sont sensiblement identiques, c'est-à-dire ont la même masse et la même répartition de masse, et que leur nombre est pair, pour éviter que le véhicule tracteur de tête soit en équilibre sur son essieu arrière, on peut prévoir que la longueur active du timon du véhicule tracteur de tête soit comprise entre 3/4 et une fois la distance précitée, ce qui laisse un appui suffisant pour les roues directrices avant du véhicule tracteur de tête.

Selon encore une autre caractéristique de l'invention, le système comporte des moyens de soulèvement associés à la broche ou au timon correspondant pour produire au moins deux valeurs de soulèvement, dont l'une correspond à la hauteur de soulèvement des roues avant du premmier véhicule tracté par rapport au sol alors que l'assiette du timon du véhicule tracteur de tête reste sensiblement horizontale, et l'autre valeur est augmentée pour les véhicules suivants dont l'avant s'appuie sur un timon déjà incliné.

Pour que tous les véhicules tractés du système de remorquage aient la même inclinaison, la seconde valeur est sensiblement double de la première.

L'invention vise également un véhicule automobile pouvant être utilisé dans le système de remorquage comme véhicule tracté ou comme véhicule tracteur de tête suivant la revendication 13 ou 14, respectivement.

L'invention sera mieux comprise, et d'autres buts, caractéristiques, détails et avantages de celle-ci apparaîtront plus clairement au cours de la description explicative qui va suivre de plusieurs modes de réalisation particuliers actuellement préférés, donnés uniquement à titre d'exemples illustratifs et non limitatifs, en référence aux dessins schématiques annexés, dans lesquels :

La figure 1 représente schématiquement l'épure de direction d'un système de remorquage connu dans un virage.

La figure 2 représente schématiquement l'épure de direction du système de remorquage de l'invention dans un virage.

Les figures 3A et 3B sont des vues schématiques en élévation latérale d'un premier mode de réalisation du système de remorquage de l'invention, respectivement en position de repos et accouplée.

Les figures 4A et 4B sont des vues analogues aux figures 3A et 3B, mais représentant un second mode de réalisation du système de remorquage de l'invention.

La figure 5 est une vue analogue à la figure 4B, mais représentant le système de remorquage avec trois unités.

La figure 6 est une vue analogue à la figure 4B, mais représentant une variante de réalisation du système de remorquage de l'invention.

Les figures 7 et 8 sont des vues schématiques en élévation latérale de deux autres modes de réalisation particuliers du véhicule automobile de l'invention.

Les figures 9A et 9B sont des vues schématiques, partielles et de dessous du timon d'attelage du véhicule de la figure 8 respectivement en position rétractée et saillante.

La figure 10 est une vue partielle et de dessus du timon d'attelage d'un autre mode de réalisation de l'invention.

Les figures 11 et 12 sont des vues de côté de la figure 10, respectivement en position attelée au repos et en position de remorquage du timon.

Suivant l'exemple de réalisation représenté sur la figure 2, on voit que le système de remorquage de l'invention comporte un véhicule tracteur 1 et un ou plusieurs véhicules tractés en file indienne, par exemple, trois véhicules tractés 2, 2' et 2".

Au sens de l'invention, les véhicules 2 et 2' sont à la fois tracteurs et tractés.

La zone Z représente la trajectoire du train de véhicule ainsi constitué, lorsqu'il prend un virage dans la direction de la flèche F et le point C représente le centre de pivotement commun à tous les véhicules tracteurs ou tractés.

On voit sur la figure 2 qu'un timon 3 est attaché à l'arrière des véhicules par l'une de ses extrémités et vient s'accoupler par son autre extrémité libre opposée sur une broche d'attelage 4 rigidement fixée à l'avant des véhicules tractés 2, 2', 2".

En position de remorquage, le timon 3 est agencé de façon que la longueur L entre son extrémité libre extérieurement saillante et l'axe de l'essieu arrière 7 du véhicule qui le porte, soit sensiblement égale à la distance D entre la broche d'attelage 4 et l'essieu arrière 7 du véhicule tracté suivant.

Bien entendu, les véhicules faisant partie d'un même train de remorquage peuvent avoir des empattements identiques ou différents.

On a indiqué en 8 l'essieu avant de chaque véhicule sur les figures 1 à 8.

Tel que représenté sur les figures 1 et 2, le timon 3 présente la forme d'un "trident" en position de remorquage, pour renforcer sa fixation sur le véhicule et éviter tout pivotement de cette fixation.

Les figures 3A et 3B montrent une première variante de réalisation du système de l'invention, dans laquelle le timon 3 est constitué d'une perche rigide rectiligne coulissant dans un logement tubulaire correspondant 9 fixé sous le plancher du véhicule tracteur 1.

Le logement tubulaire 9 est articulé en rotation sur un axe transversal 10 rigidement fixé à l'avant du véhicule et sur un autre axe transversal parallèle 11 fixé à l'extrémité libre d'une tige de vérin 12 qui est lui-même fixé à rotation à l'arrière de ce véhicule.

Le vérin 12 peut être quelconque, par exemple mécanique, électrique, hydraulique ou pneumatique et sa commande peut être manuelle ou automatique.

Ce vérin 12 assure le déplacement vertical du logement tubulaire 9 et donc du timon 3 par rotation autour du point fixe 10.

On a indiqué en 3a à l'extrémité libre du timon 3 une rotule percée de part en part pour recevoir la broche d'attelage 4 d'un véhicule 2 à tracter.

On a représenté schématiquement sur la figure 3B une goupille de blocage 13 coopérant avec un système d'indexage sur le timon 3 pour verrouiller ce dernier dans sa position extérieurement saillante en vue du remorquage.

On remarquera également que la broche d'attelage 4 est prévue sensiblement à l'avant de l'essieu 8 et que le vérin 12 est monté sensiblement à l'arrière de l'essieu 7.

Dans la position de repos représentée sur la figure 3A, le timon 3 est complètement escamoté sous le véhicule et sensiblement horizontal et parallèle au sol S.

Le timon 3 peut être abaissé par le vérin 12 de manière à placer la rotule 3a sous la broche d'attelage 4 et à sa verticale et permettre ainsi leur accouplement par soulèvement ultérieur du timon 3 sous l'action du même vérin 12.

Sur la figure 3B, on voit que le vérin 12 a poursuivi son mouvement de soulèvement du timon 3 jusqu'à ce que les roues avant R du véhicule tracté 2 ne soient plus en contact avec le sol S.

La variante illustrée sur les figures 4A et 4B équivaut fonctionnellement à celle des figures 3A et 3B, dans la mesure où le vérin 12 est associé directement à la broche 4 à la place du timon 3.

On voit ici que le vérin 12 est rigidement fixé à l'avant du véhicule tracté 2 et porte à l'extrémité libre de sa tige la broche d'attelage 4 précitée, de manière à abaisser la broche d'attelage 4 dans une direction purement verticale par rapport au véhicule 2, alors que dans la variante des figures 3A et 3B, le déplacement vertical du timon 3 se fait par rotation dans un plan vertical.

On pourrait prévoir bien entendu que le timon 3 et la broche d'attelage 4 soient décalés dans un plan vertical de façon que le vérin 12 ne fonctionne que dans un seul sens, à savoir en traction sur les figures 3A et 3B et en compression sur les figures 4A et 4B.

On voit sur les figures 3A, 3B et 4A, 4B que le timon 3 est mobile entre une position rétractée complètement escamotée sous le plancher de son véhicule porteur et une position extérieurement saillante réglable en longueur en fonction notamment de la distance D du véhicule à tracter. Ce réglage peut se faire manuellement ou automatiquement avec un vérin et grâce aux moyens d'indexage sur la perche 3 coopérant avec la goupille de blocage 13 précitée.

On voit sur les figures 3 et 4 que le véhicule 1 ne peut être utilisé que comme tracteur et le véhicule 2 ne peut être que tracté.

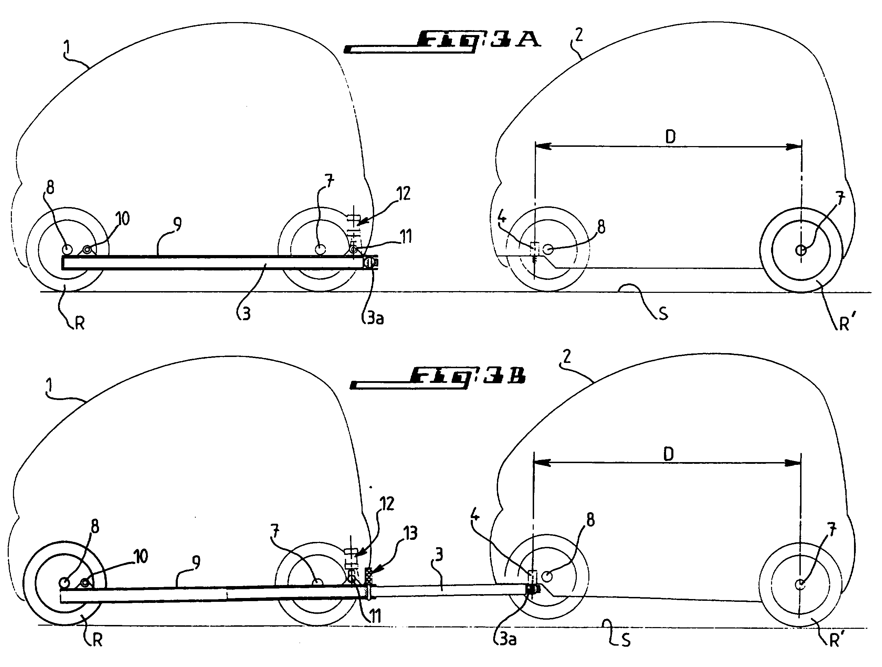

On a représenté sur la figure 5 un train de véhicule à trois unités, comportant sensiblement le même système de remorquage que celui des figures 4A et 4B.

On voit sur la figure 5 que le véhicule tracté 2 comporte à la fois une broche d'attelage 4 et un timon 3 de sorte qu'il peut être aussi bien tracté qu'utilisé comme tracteur, alors que les véhicules 1 et 2' sont destinés exclusivement à tracter et à être tracté respectivement.

Bien entendu, on pourrait prévoir que tous les véhicules soient du type du véhicule 2 de la figure 5 de manière à les rendre interchangeables.

Le train de véhicule représenté en position de remorquage sur la figure 5 est agencé de façon que le véhicule tracteur 1 et donc son timon 3 gardent une assiette sensiblement horizontale pour que l'appui des roues directrices avant de ce véhicule sur le sol S ait une adhérence suffisante pour assurer de bonnes conditions dynamiques de circulation.

Lorsque le premier véhicule tracté 2 est soulevé d'une hauteur H1 par rapport au sol correspondant à l'abaissement H1 de la tige de vérin 12, cela entraîne l'inclinaison du timon 3 associé à ce véhicule 2 et donc l'abaissement de sa rotule d'extrémité 3a.

Il est donc nécessaire de soulever davantage le véhicule tracté suivant 2' pour compenser l'inclinaison du timon 3 du véhicule 2 et décoller les roues avant du véhicule 2'.

Dans le cas où tous les véhicules 1, 2, 2' ont un même empattement, notamment lorsqu'ils sont identiques, la rotule d'extrémité 3a du timon 3 du véhicule tracté 2 s'abaisse d'une hauteur H1 correspondante du fait de l'égalité de la longueur L et de la distance D et la valeur d'abaissement d'une hauteur H2 de la tige de vérin 12 du véhicule tracté 2' devra être supérieure à la hauteur H1 et de préférence double de celle-ci pour que les véhicules 2 et 2' aient la même inclinaison.

Si d'autres véhicules identiques doivent être remorqués derrière le véhicule 2', la tige de leur vérin respectif devra s'abaisser d'une valeur correspondant à H2 pour garder la même inclinaison.

Pour que le véhicule tracteur de tête 1 garde une assiette horizontale et un appui suffisant sur ses roues directrices avant, il peut être nécessaire de le lester à l'avant lorsque tous les véhicules tracteurs ou tractés sont identiques ou bien d'utiliser un véhicule tracteur ayant un empattement plus long ou une répartition de masse supérieure à l'avant.

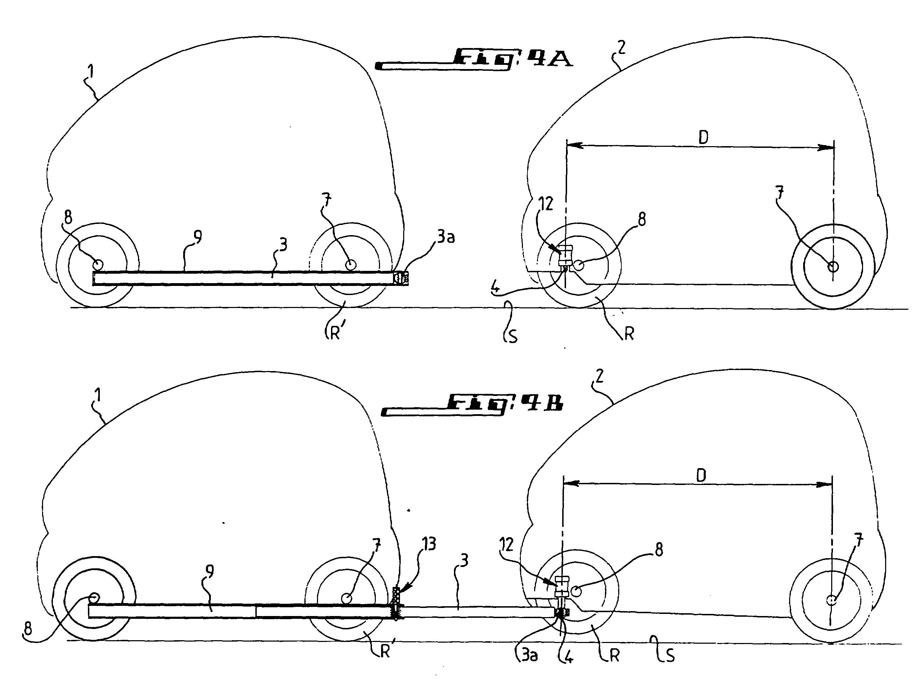

Une autre solution dans le cas où des véhicules identiques constituent le système de remorquage est représentée à la figure 6.

On voit sur cette figure que le véhicule tracteur 1 est équipé à la fois d'une broche d'attelage 4 déplaçable verticalement dans la direction indiquée par les flèches 14 par un vérin 12 et d'un timon 3 déplaçable horizontalement sous le plancher du véhicule.

Cette solution consiste à régler la position de remorquage du timon 3 de façon que sa longueur active L' entre l'essieu arrière 7 et sa rotule d'extrémité 3a soit sensiblement réduite par rapport à la distance D, ce qui réduit le bras de levier exercé par le véhicule tracté 2 sur le véhicule tracteur 1.

Cette longueur L' sera avantageusement comprise entre 3/4 et une fois la distance D précitée.

Les véhicules tractés suivants éventuels pourront quant à eux respecter l'égalité entre la longueur L et la distance D. Ainsi, la trajectoire des véhicules suiveurs s'écartera peu de celle du véhicule tracteur de tête.

Dans le cas où le système de remorquage comporte un nombre impair de véhicules tracteurs ou tractés, il n'est plus nécessaire de raccourcir la longueur L par rapport à la distance D, car le dernier véhicule de la file redonnera de l'appui à l'avant du véhicule tracteur 1.

On voit clairement sur la figure 5 que le véhicule tracté 2' compense le soulèvement exercé par le véhicule tracté 2 sur le véhicule tracteur 1.

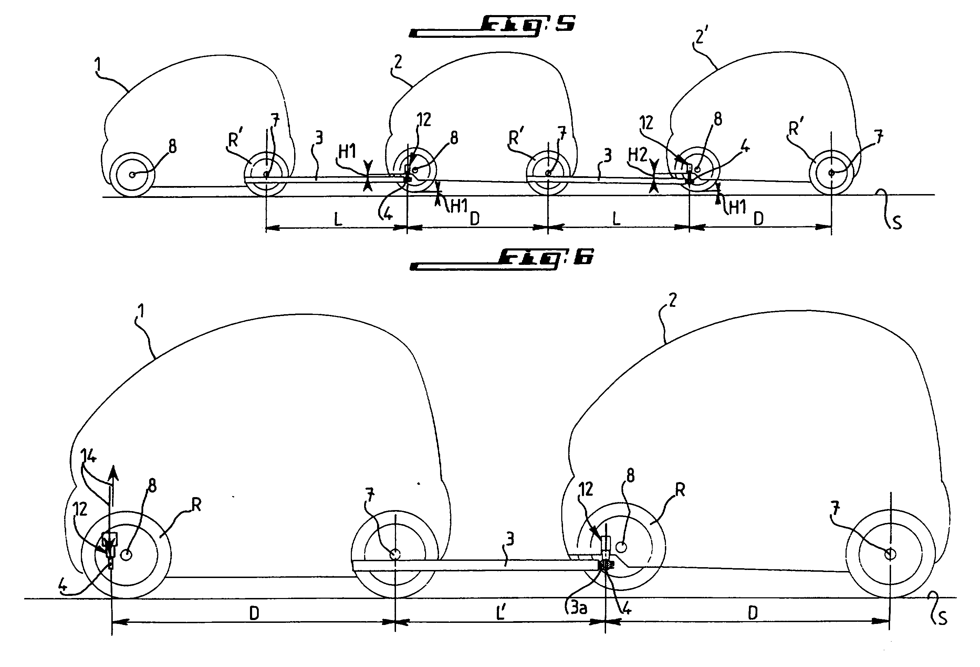

Les figures 7 à 9 montrent un véhicule automobile équipé d'un autre mode de réalisation du système de remorquage de l'invention.

Dans la variante représentée sur la figure 7, le véhicule 1 comporte une broche d'attelage fixe 4 à l'avant du véhicule et à l'arrière de celui-ci un timon 33 portant à son extrémité libre une rotule 33a et dont l'autre extrémité opposée 33b est articulée en 15 sur un axe transversal rigidement fixé à l'arrière du véhicule et en 16 sur un autre axe transversal parallèle solidaire d'une tige de vérin 12 qui est articulé sur le véhicule.

On remarquera que sur la figure 7 le vérin 12 est agencé sensiblement horizontalement dans la direction longitudinale du véhicule, alors que dans les figures 3A et 3B, le vérin 12 est agencé verticalement.

On a indiqué en traits ombrés sur la figure 7 une position abaissée du timon 33 après son pivotement sur l'axe 15 sous l'action du vérin 12.

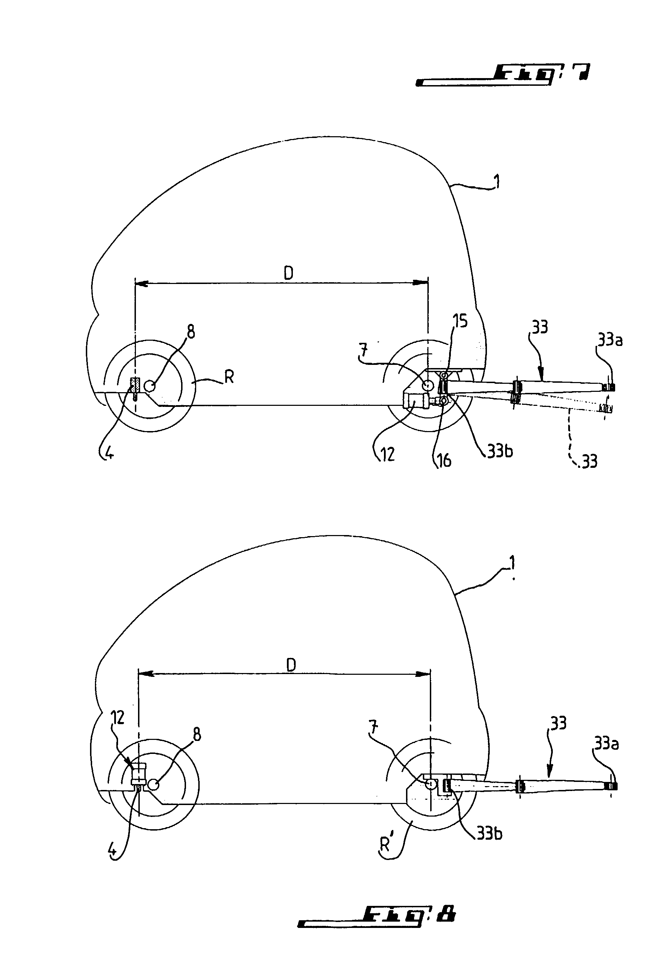

Dans la variante illustrée sur la figure 8, le timon 33 est rigidement fixé à son extrémité 33b sur l'arrière du véhicule 1 et le vérin 12 est associé à la broche d'attelage 4 comme dans les figures 4A et 4B.

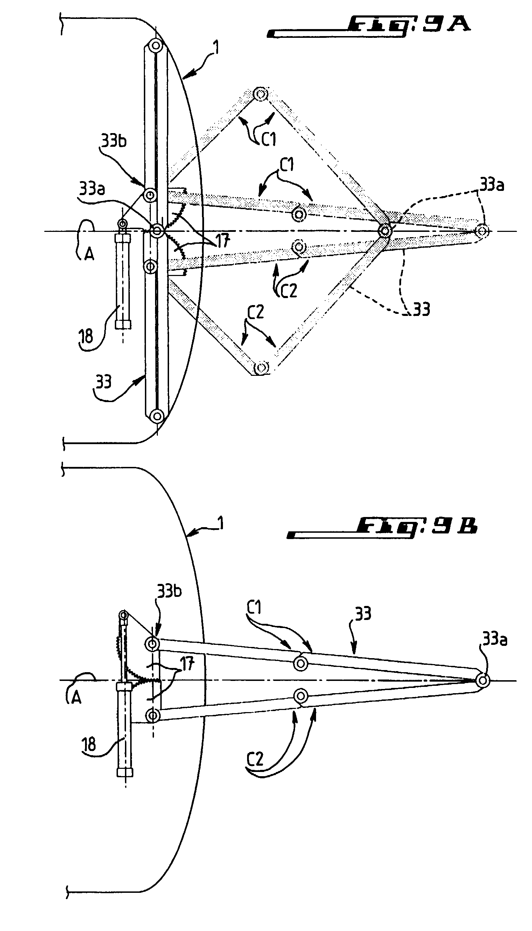

On va maintenant décrire plus en détail la structure et le fonctionnement du timon 33 en se reportant plus particulièrement aux figures 9A et 9B.

On voit sur ces figures que le timon 33 est un quadrilatère déformable constitué de deux paires de côtés C1 et C2 symétriques par rapport à la direction longitudinale A du véhicule, chaque paire C1, C2 étant reliée de manière articulée sur des axes verticaux respectivement à la rotule d'extrémité 33a et à l'extrémité interne 33b du timon 33.

Les deux côtés de chaque paire C1, C2 sont également reliés ensemble de manière articulée en série entre les extrémités 33a et 33b du timon 33.

Deux quarts de disque engrenant mutuellement 17 sont solidaires en rotation respectivement de chaque côté C1, C2 au niveau de l'extrémité 33b du timon 33 pour synchroniser le déploiement et le retrait de chaque côté du timon 33.

L'un des quarts de disque 17 est relié de manière articulée à la tige d'un vérin 18 agencé transversalement par rapport au véhicule pour commander la déformation du quadrilatère 33. En position de repos ou d'utilisation autonome représentée en traits forts sur la figure 9A, le timon 33 est dans une position rétractée aplatie transversale complètement escamotée sous l'arrière du véhicule 1.

En position de remorquage représentée sur la figure 9B, le timon 33 est dans une position déployée aplatie longitudinale à l'extérieur du véhicule.

On a représenté en traits ombrés sur la figure 9A une position déployée intermédiaire et la position déployée maximale du timon 33, pour montrer que la longueur active L précitée est également réglable dans ce mode de réalisation.

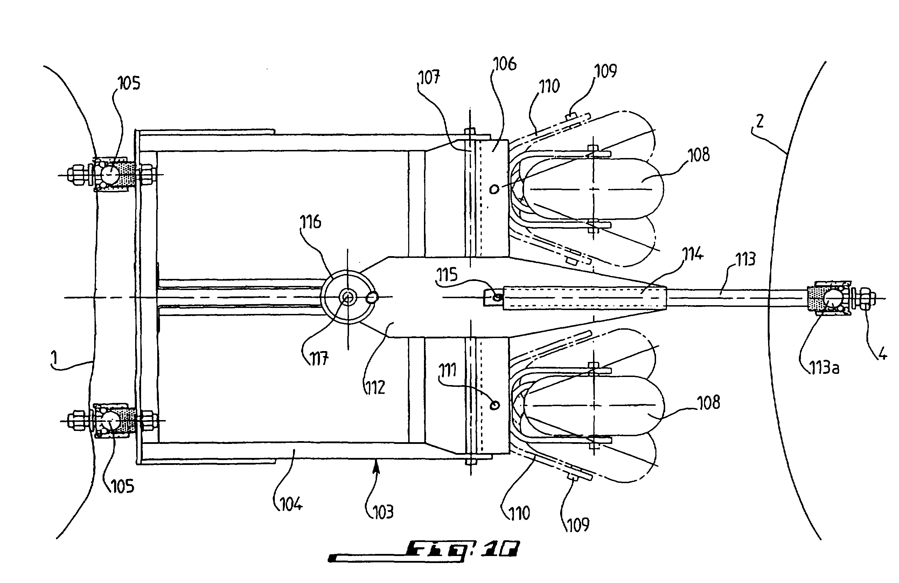

On va maintenant décrire un autre mode de réalisation du système de l'invention, en référence aux figures 10 à 12.

Le système comporte ici un timon 103 constitué d'un cadre horizontal 104 qui est fixé à l'avant à deux rotules 105 de l'arrière du véhicule tracteur 1.

Une traverse 106 dont la section verticale a une forme générale de C ouvert vers l'arrière, est montée articulée sur un axe 107 solidaire de l'arrière du cadre 104.

Le système de l'invention comporte en outre une paire de roues autodirectrices 108 qui sont montées rotatives autour d'un axe 109 entre une paire de chapes 110 qui sont à leur tour librement articulés autour d'un axe autodirecteur sensiblement vertical 111 sur la traverse 106 précitée.

Les roues 108 sont en contact avec le sol et changent automatiquement de direction comme représenté en traits interrompus sur la figure 10 pour suivre la trajectoire du véhicule tracteur 1. Les roues 108 servent également de point d'appui pour le timon 103 et le véhicule tracté 2.

Le timon 103 comporte en outre un bras formant porte-flèche 112 s'étendant dans la direction longitudinale des véhicules et solidaire de la traverse 106 précitée. Ce bras 112 supporte une perche ou flèche 113 qui coulisse dans un logement tubulaire 114 dans la direction longitudinale pour régler la longueur active du timon.

L'extrémité libre 113a de la perche 113 vient s'accoupler de manière articulée sur la rotule de la broche d'attelage 4 du véhicule tracté 2.

Une goupille de réglage 115 est prévue saillante sur l'extrémité avant de la perche 113 pour servir de butée de fin de course contre le logement tubulaire 114 en position de remorquage. On peut bien entendu régler la position de cette goupille 115 le long de la perche 113 pour régler la longueur active du timon.

Le système de l'invention comporte également un moyen de verrouillage du timon en position de repos et de remorquage, ce moyen étant constitué d'un volant 116 qui tourne sur une vis sans fin 117 reliée au cadre 104 par un axe horizontal transversal 118.

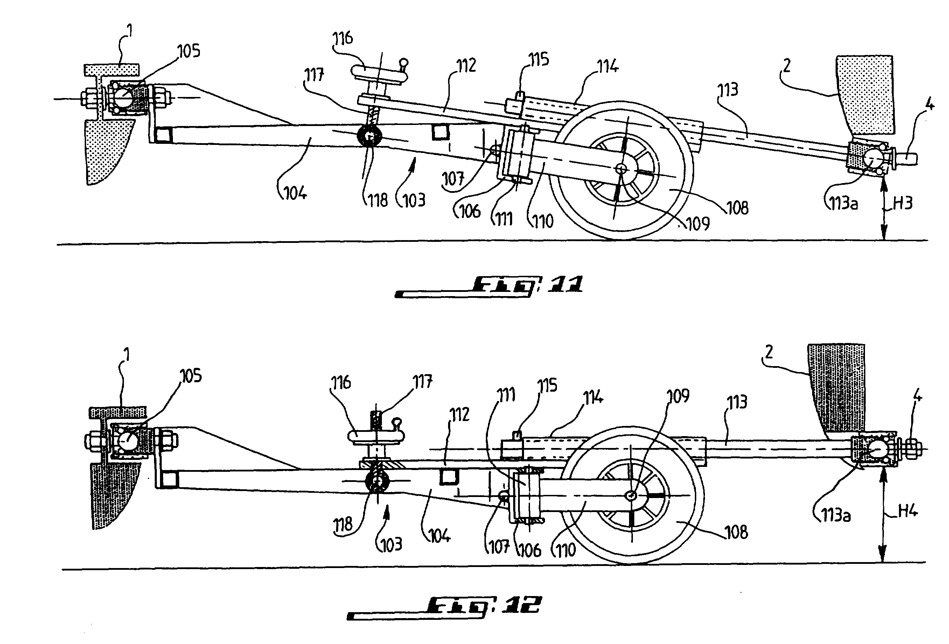

On va maintenant brièvement décrire le montage du timon 103 sur le véhicule tracteur 1 et le véhicule tracté 2 en référence aux figures 11 et 12.

Le timon 103 se présente tout d'abord avec sa perche 113 dans une position abaissée vers l'arrière (voir figure 11) pour accoupler rigidement l'avant du timon 103 sur les rotules 105 de l'arrière du véhicule tracteur 1 et de manière articulée l'extrémité libre 113a sur la broche d'attelage 4 du véhicule tracté 2.

On voit sur la figure 11 que l'inclinaison de la perche 113 entraîne l'inclinaison des chapes 110 car celles-ci sont liées au bras 112 par l'intermédiaire de la traverse basculante 106, ce qui provoque un léger soulèvement de l'arrière du cadre 104.

On vient ensuite tourner le volant 116 sur la vis sans fin 117 pour rabattre le bras 112 sur le cadre 104, ce qui provoque le soulèvement du véhicule tracté 2 d'une valeur correspondant à la différence entre les hauteurs H4 et H3.

Simultanément au soulèvement du véhicule tracté 2, les chapes 110 des roues autodirectrices 108 basculent dans une position horizontale, de manière à conférer à l'ensemble du cadre 104, des chapes 110 et de la perche 113 une configuration sensiblement horizontale, telle qu'illustrée sur la figure 12. Dans cette position, l'équilibre du système de remorquage est grandement amélioré car la présence des roues autodirectrices 108 a pour effet d'augmenter le poids sur l'essieu avant du véhicule tracteur 1 et donc d'améliorer l'adhérence des roues directrices de ce véhicule.

Bien entendu, le volant 116 permet également de limiter le basculement du bras 112 vers l'arrière.

Bien que l'invention ait été décrite en référence à des modes de réalisation particuliers, il est bien évident qu'elle n'y ait nullement limitée et qu'elle comprend tous les équivalents techniques des moyens décrits ainsi que leurs combinaisons si celles-ci entrent dans le cadre des revendications qui suivent.

## Revendications

1. Système de remorquage pour au moins un véhicule tracteur (1) et au moins deux véhicules tractés (2,2'), comprenant entre deux véhicules successifs un attelage constitué d'un timon (3, 33, 103) et d'une broche d'attelage (4) destinés à s'accoupler, caractérisé en ce qu'un timon (3, 33, 103) est attaché de façon rigide horizontalement à l'une de ses extrémités (33b, 105) à l'arrière du véhicule tracteur (1) et une broche d'attelage (4) est fixée à l'avant du véhicule tracté (2) pour s'accoupler de manière articulée avec l'extrémité libre extérieurement saillante (3a, 33a, 113a) du timon, de façon que le timon soit déplaçable verticalement par rapport à la broche d'attelage correspondante (4) pour permettre le soulèvement des roues avant du véhicule tracté (2) et en ce que, entre deux véhicules tractés successifs (2, 2'), la longueur (L) entre l'extrémité libre extérieurement saillante du timon et l'axe (7) de l'essieu arrière du véhicule tracté (2) est sensiblement égale à la distance (D) entre la broche d'attelage (4) et l'essieu arrière (7) du véhicule tracté suivant (2').

2. Système selon la revendication 1, caractérisé en ce que le timon (3, 33) est déplaçable par rapport à son véhicule porteur entre une position escamotée de repos dans le véhicule et une position extérieurement saillante vers l'arrière pour le remorquage.

3. Système selon la revendication 2, caractérisé en ce que le timon est une perche rigide rectiligne (3), coulissant dans un logement correspondant (9) sous le plancher du véhicule.

4. Système selon la revendication 2, caractérisé en ce que le timon est un polygone déformable (33) à au moins quatre côtés (C1, C2), et pouvant prendre une position aplatie transversale à l'arrière de son véhicule porteur au repos, et une position déployée longitudinale pour le remorquage.

5. Système selon la revendication 1, caractérisé en ce que le timon (103) comporte au moins une roue autodirectrice folle (108) qui est destinée à rouler sur le sol.

6. Système selon la revendication 5, caractérisé en ce que le timon (103) comporte un moyen de soulèvement pour soulever les roues avant du véhicule tracté (2), ce moyen étant constitué d'un bras (112) basculant autour d'un axe horizontal transversal (107) et dont l'extrémité libre (113a) vient s'accoupler de manière articulée sur la broche d'attelage (4).

7. Système selon la revendication 6, caractérisé en ce que l'axe autodirecteur (111) de chaque roue folle (108) est solidaire du bras (112) précité.

8. Système selon l'une des revendications précédentes, caractérisé en ce que le timon (3, 33) est déplaçable verticalement par rapport à la broche d'attelage correspondante (4) pour permettre également leur accrochage mutuel.

9. Système selon la revendication 8, caractérisé en ce qu'il comporte des moyens de soulèvement (12) associés à la broche (4) ou au timon correspondant (3, 33) pour produire au moins deux valeurs de soulèvement (H1, H2), dont l'une (H1) correspond à la hauteur de soulèvement des roues avant (R) du premier véhicule tracté (2) par rapport au sol (S), et l'autre valeur (H2) est augmentée pour les véhicules suivants (2', 2").

10. Système selon la revendication 8 ou 9, caractérisé en ce que, dans le cas où tous les véhicules sont sensiblement identiques et le nombre de véhicules soulevés est impair, la longueur active (L') du timon du véhicule tracteur de tête (1) est réglée entre 3/4 et une fois la distance précitée (D).

11. Système selon la revendication 8 ou 9, caractérisé en ce que, dans le cas où tous les véhicules sont sensiblement identiques et le nombre de véhicules soulevés est impair, le véhicule tracteur de tête (1) est lesté à l'avant pour assurer un appui suffisant de ses roues directrices avant (R) sur le sol (S).

12. Système selon l'une des revendications précédentes, caractérisé en ce qu'il comporte des moyens de réglage (18, 115) de la longueur active (L) du timon (3, 33, 103), c'est-à-dire de la longueur entre son extrémité libre et l'essieu arrière du véhicule tracteur, et des moyens de verrouillage (13, 116) du timon respectivement en position de repos et de remorquage.

13. Véhicule automobile pouvant être utilisé comme véhicule tracté dans le système de remorquage selon l'une des revendications précédentes, caractérisé en ce qu'il comprend une broche d'attelage (4) solidaire de l'avant du véhicule tracté (2) et un timon (3, 33, 103) dont l'une des extrémités (33b, 105) est attachée à l'arrière du véhicule (2) de façon rigide horizontalement et l'autre extrémité (3a, 33a, 113a) est libre et apte à s'accoupler de manière articulée en position extérieurement saillante avec une autre broche d'attelage d'un véhicule tracté suivant (2'), de façon que le timon soit déplaçable verticalement par rapport à la broche d'attelage correspondante (4) pour permettre le soulèvement des roues avant du véhicule tracté suivant (2') et en ce que la distance (D) entre l'essieu arrière (7) du véhicule tracté (2) et sa broche d'attelage (4) est sensiblement égale à la longueur (L) entre ledit essieu arrière (7) et l'extrémité libre (3a, 33a, 113a) dudit timon en position extérieurement saillante de remorquage.

14. Véhicule automobile pouvant être utilisé comme véhicule tracteur de tête (1) dans le système de remorquage selon l'une des revendications 1 à 12, caractérisé en ce qu'il comprend une broche d'attelage (4) solidaire de l'avant du véhicule (1) et un timon (3, 33, 103) dont l'une des extrémités (33b, 105) est attachée à l'arrière du véhicule (1) de façon rigide horizontalement et l'autre extrémité (3a, 33a, 113a) est libre et apte à s'accoupler de manière articulée en position extérieurement saillante avec une broche d'attelage (4) d'un véhicule à tracter (2), de façon que le timon soit déplaçable verticalement par rapport à la broche d'attelage correspondante (4) pour permettre le soulèvement des roues avant du véhicule tracté (2) et en ce que la longueur active (L') entre l'essieu arrière (7) du véhicule tracteur de tête (1) et l'extrémité libre (3a, 33a, 113a) du timon en position extérieurement saillante de remorquage est réglée entre 3/4 et une fois la distance (D) entre ledit essieu arrière (7) et la broche d'attelage (4) du véhicule tracteur (1).

15. Véhicule selon la revendication 13 ou 14, caractérisé en ce que le timon est tel que défini dans le système de remorquage selon l'une des revendications 2 à 8.

16. Véhicule selon la revendication 13 ou 14, caractérisé en ce qu'il comporte des moyens de soulèvement vertical (12) associés à la broche ou au timon pour produire au moins deux valeurs de soulèvement (H1, H2).

17. Véhicule selon l'une des revendications 13 à 16, caractérisé en ce qu'il comprend des moyens de réglage (18, 115) de la longueur active (L) du timon et des moyens de verrouillage (13, 116) du timon respectivement en position de repos et de remorquage.

## Patentansprüche

1. Abschleppsystem für wenigstens ein ziehendes Fahrzeug (1) und wenigstens zwei gezogene Fahrzeuge (2, 2'), umfassend zwischen zwei aufeinanderfolgenden Fahrzeugen eine durch eine Deichsel (3, 33, 103) und einen Vorsteckbolzen (4) gebildete Kuppelvorrichtung, die dazu bestimmt sind, sich anzukoppeln, dadurch gekennzeichnet, daß eine Deichsel (3, 33, 103) hinten am ziehenden Fahrzeug (1) steif horizontal an einem ihrer äußeren Enden (33b, 105) befestigt ist und ein Vorsteckbolzen (4) vorne am gezogenen Fahrzeug (2) befestigt ist, um sich artikuliert an dem freien hervorstehenden äußeren Ende (3a, 33a, 113a) der Deichsel derart anzukoppeln, daß die Deichsel im Verhältnis zum entsprechenden Vorsteckbolzen (4) vertikal verschiebbar ist, um das Anheben der Vorderräder des gezogenen Fahrzeugs (2) zu erlauben, und daß zwischen zwei aufeinanderfolgenden gezogenen Fahrzeugen (2, 2') die Länge (L) zwischen dem außen hervorstehenden freien äußeren Ende der Deichsel und der Achse (7) der Hinterachse des gezogenen Fahrzeugs (2) deutlich gleich der Entfernung (D) zwischen dem Vorsteckbolzen (4) und der Hinterachse (7) des nachfolgenden gezogenen Fahrzeugs (2') ist.

2. Abschleppsystem gemäß Anspruch 1, dadurch gekennzeichnet, daß die Deichsel (3, 33) im Verhältnis zu ihrem Trägerfahrzeug zwischen einer eingefahrenen Ruheposition im Fahrzeug und einer außen nach hinten hervorstehenden Abschlepp-Position verschiebbar ist.

3. Abschleppsystem gemäß Anspruch 2, dadurch gekennzeichnet, daß die Deichsel eine geradlinige steife Stange ist (3), die in einer entsprechenden Aufnahme (9) unter dem Fußbrett des Fahrzeugs gleitet.

4. Abschleppsystem gemäß Anspruch 2, dadurch gekennzeichnet, daß die Deichsel ein verformbares Polygon (33) mit wenigstens vier Seiten (C1, C2) ist, das in Ruhestellung eine nach hinten zu seinem Trägerfahrzeug abgeflachte querverlaufende Position und eine längs verlaufende ausgefahrene Abschlepp-Position einnehmen kann.

5. Abschleppsystem gemäß Anspruch 1, dadurch gekennzeichnet, daß die Deichsel (103) wenigstens ein selbststeuerndes Losrad (108) umfaßt, das dazu bestimmt ist, auf dem Boden zu fahren.

6. Abschleppsystem gemäß Anspruch 5, dadurch gekennzeichnet, daß die Deichsel (103) ein Anhebemittel zum Anheben der Vorderräder des gezogenen Fahrzeugs (2) umfaßt, wobei dieses Mittel aus einem um eine horizontale Querachse (107) schwenkenden Arm (112) gebildet wird, dessen freies äußeres Ende (113a) sich artikuliert an dem Vorsteckbolzen (4) ankoppelt.

7. Abschleppsystem gemäß Anspruch 6, dadurch gekennzeichnet, daß die selbststeuemde Achse (111) jedes Losrades (108) mit dem vorgenannten Arm (112) fest verbunden ist.

8. Abschleppsystem gemäß einem der vorherigen Ansprüche, dadurch gekennzeichnet, daß die Deichsel (3, 33) im Verhältnis zum entsprechenden Vorsteckbolzen (4) vertikal verschiebbar ist, um ebenfalls ihr gegenseitiges Ankoppeln zu erlauben.

9. Abschleppsystem gemäß Anspruch 8, dadurch gekennzeichnet, daß es Anhebemittel (12) umfaßt, die dem Bolzen (4) oder der entsprechenden Deichsel (3, 33) beigeordnet sind, um wenigstens zwei Anhebewerte (H1, H2) zu produzieren, von denen der eine (H1) der Anhebehöhe der Vorderräder (R) des ersten gezogenen Fahrzeugs (2) im Verhältnis zum Boden (S) entspricht und der andere Wert (H2) für die nachfolgenden Fahrzeuge (2', 2") erhöht wird.

10. Abschleppsystem gemäß Anspruch 8 oder 9, dadurch gekennzeichnet, daß in dem Falle, in dem alle Fahrzeuge deutlich identisch und die Anzahl der angehobenen Fahrzeug ungerade ist, die aktive Länge (L') der Deichsel des vorderen ziehenden Fahrzeugs (1) zwischen ¾ und eineinhalb Mal der vorgenannten Entfernung (D) eingestellt ist.

11. Abschleppsystem gemäß Anspruch 8 oder 9, dadurch gekennzeichnet, daß in dem Falle, in dem alle Fahrzeuge deutlich identisch und die Anzahl der angehobenen Fahrzeuge ungerade ist, das vordere ziehende Fahrzeug (1) vorne belastet wird, um einen ausreichenden Halt seiner vorderen Steuerräder (R) auf dem Boden (S) zu gewährleisten.

12. Abschleppsystem gemäß einem der vorherigen Ansprüche, dadurch gekennzeichnet, daß es Einstellmittel (18, 115) für die aktive Länge (L) der Deichsel (3, 33, 103) umfaßt, das heißt, die Länge zwischen ihrem freien äußeren Ende und der Hinterachse des ziehenden Fahrzeugs, und Verriegelungsmittel (13, 116) der Deichsel jeweils in der Ruhe- und der Abschlepp-Position.

13. Kraftfahrzeug, das als ziehendes Fahrzeug in dem Abschleppsystem gemäß einem der vorherigen Ansprüche gebraucht werden kann, dadurch gekennzeichnet, daß es einen mit dem Vorderteil des gezogenen Fahrzeugs (2) fest verbundenen Vorsteckbolzen (4) und eine Deichsel (3, 33, 103) umfaßt, deren eines äußeres Ende (33b, 105) hinten am Fahrzeug (2) horizontal steif befestigt ist und das andere äußere Ende (3a, 33a, 113a) frei ist und geeignet, sich artikuliert in außen hervorstehender Position an einen anderen Vorsteckbolzen eines nachfolgenden gezogenen Fahrzeugs (2') derart anzukoppeln, daß die Deichsel im Verhältnis zum entsprechenden Vorsteckbolzen (4) vertikal verschiebbar ist, um das Anheben der Vorderräder des nachfolgenden gezogenen Fahrzeugs (2') zu erlauben, und daß die Entfernung (D) zwischen der Hinterachse (7) des gezogenen Fahrzeugs (2) und seinem Vorsteckbolzen (4) deutlich gleich der Länge (L) zwischen besagter Hinterachse (7) und dem freien äußeren Ende (3a, 33a, 113a) besagter Deichsel in außen hervorstehender Abschlepp-Position ist.

14. Kraftfahrzeug, das als vorderes ziehendes Fahrzeug (1) in dem Abschleppsystem gemäß Anspruch 1 bis 12 gebraucht werden kann, dadurch gekennzeichnet, daß es einen mit der Vorderseite des Fahrzeugs (1) fest verbundenen Vorsteckbolzen (4) und eine Deichsel (3, 33, 103) umfaßt, deren eines äußeres Ende (33b, 105) hinten am Fahrzeug (1) horizontal steif befestigt ist und das andere äußere Ende (3a, 33a, 113a) frei ist und geeignet, sich artikuliert in außen hervorstehender Position an einen Vorsteckbolzen (4) eines gezogenen Fahrzeugs (2) derart anzukoppeln, daß die Deichsel im Verhältnis zum entsprechenden Vorsteckbolzen (4) vertikal verschiebbar ist, um das Anheben der Vorderräder des gezogenen Fahrzeugs (2) zu erlauben, und daß die aktive Länge (L') zwischen der Hinterachse (7) des vorderen ziehenden Fahrzeugs (1) und dem freien äußeren Ende (3a, 33a, 113a) der Deichsel in außen hervorstehender Abschlepp-Position zwischen ¾ und eineinhalb Mal der Entfernung (D) zwischen besagter Hinterachse (7) und dem Vorsteckbolzen (4) des ziehenden Fahrzeugs (1) eingestellt ist.

15. Fahrzeug gemäß Anspruch 13 oder 14, dadurch gekennzeichnet, daß die Deichsel wie im Abschleppsystem gemäß Anspruch 2 bis 8 definiert ist.

16. Fahrzeug gemäß Anspruch 13 oder 14, dadurch gekennzeichnet, daß sie dem Bolzen oder der Deichsel beigefügte vertikale Anhebemittel (12) umfaßt, um wenigstens zwei Anhebewerte (H1, H2) zu produzieren.

17. Fahrzeug gemäß Anspruch 13 bis 16, dadurch gekennzeichnet, daß es Einstellmittel (18, 115) der aktiven Länge (L) der Deichsel und Verriegelungsmittel (13, 116) der Deichsel jeweils in Ruhe- und in Abschlepp-Position umfaßt.

## Claims

1. Towing system for at least one towing vehicle (1) and at least two towed vehicles (2, 2'), comprising, between two successive vehicles, a coupler formed by a drawbar (3, 33, 103) and a coupling spindle (4) provided to be coupled, characterized in that a drawbar (3, 33, 103) is attached in a rigid manner horizontally at one of its ends (33b, 105) to the rear of the towing vehicle (1) and a coupling spindle (4) is fixed to the front of the towed vehicle (2) to be coupled in an articulated manner with the outerly protruding free end (3a, 33a, 113a) of the drawbar, so that the drawbar is vertically movable with respect to the corresponding coupling spindle (4) for permitting the front wheels of the towed vehicle (2) to be raised and in that, between two successive towed vehicles (2, 2'), the length (L) between the outerly protruding free end of the drawbar and the axis (7) of the rear axle of the towed vehicle (2) is substantially equal to the distance (D) between the coupling spindle (4) and the rear axle (7) of the following towed vehicle (2').

2. System according to claim 1, characterized in that the drawbar (3, 33) is movable with respect to its carrier vehicle between a rest position retracted in the vehicle and a position outerly protruding toward the rear for the towing.

3. System according to claim 2, characterized in that the drawbar is a rectilinear rigid pole (3) that slides in a corresponding housing (9) under the floor of the vehicle.

4. System according to claim 2, characterized in that the drawbar is a deformable polygon (33) having at least four sides (C1, C2), and capable to take a flattened transverse position at the rear of its carrier vehicle at rest, and a longitudinal extended position for the towing.

5. System according to claim 1, characterized in that the drawbar (103) comprises at least one idle self steering wheel (108) which is provided to roll on the ground.

6. System according to claim 5, characterized in that the drawbar (103) comprises a raising means for raising the front wheels of the towed vehicle (2), this means being constituted by an arm (112) that rocks around a transverse horizontal spindle (107) and the free end (113a) of which comes to be coupled in an articulated manner onto the coupling spindle (4).

7. System according to claim 6, characterized in that the self steering spindle (111) of each idle wheel (108) is rigidly connected with the pre-mentioned arm (112).

8. System according to one of the preceding claims, characterized in that the drawbar (3, 33) is vertically movable with respect to the corresponding coupling spindle (4) for enabling also their mutual capture.

9. System according to claim 8, characterized in that it comprises raising means (12) operatively associated with the spindle (4) or with the corresponding drawbar (3, 33) for producing at least two raising magnitudes (H1, H2), one (H1) of which corresponds to the raising height of the front wheels (R) of the first towed vehicle (2) with respect to the ground (S), and the other magnitude (H2) of which is increased for the following vehicles (2', 2").

10. System according to claim 8 or 9, characterized in that, in the case in which all the vehicles are substantially identical and the number of raised vehicles is an odd number, the active length (L') of the drawbar of the leading towing vehicle (1) is adjusted between ¾ and one time the pre-mentioned distance (D).

11. System according to claim 8 or 9, characterized in that, in the case in which all the vehicles are substantially identical and the number of the raised vehicles is an odd number, the leading towing vehicle (1) is frontwardly ballasted for ensuring a sufficient bearing of its front steering wheels (R) on the ground (S).

12. System according to one of the preceding claims, characterized in that it comprises means (18, 115) for adjusting the active length (L) of the drawbar (3, 33, 103), i.e. the length between its free end and the rear axle of the towing vehicle, and means (13, 116) for locking the drawbar in the rest and towing position, respectively.

13. Automobile vehicle capable of being used as a towed vehicle in the towing system according to one of the preceding claims, characterized in that it comprises a coupling spindle (4) rigidly connected with the front of the towed vehicle (2) and a drawbar (3, 33, 103) one of the ends (33b, 105) of which is attached to the rear of the vehicle (2) in an horizontally rigid manner and the other end (3a, 33a, 113a) of which is free and able to be coupled in an articulated manner in an outerly protruding position with an other coupling spindle of a following towed vehicle (2'), so that the drawbar is vertically movable with respect to the corresponding coupling spindle (4) for permitting the front wheels of the following towed vehicle (2') to be raised, and in that the distance (D) between the rear axle (7) of the towed vehicle (2) and its coupling spindle (4) is substantially equal to the length (L) between said rear axle (7) and the free end (3a, 33a, 113a) of said drawbar in the outerly protruding towing position.

14. Automobile vehicle capable of being used as a leading towing vehicle (1) in the towing system according to one of claims 1 to 12, characterized in that it comprises a coupling spindle (4) rigidly connected to the front of the vehicle (1) and a drawbar (3, 33, 103) one of the ends (33b, 105) of which is attached to the rear of the vehicle (1) in an horizontally rigid manner and the other end (3a, 33a, 113a) of which is free and able to be coupled in an articulated manner in an outerly protruding position with a coupling spindle (4) of a vehicle (2) to be towed, so that the drawbar is vertically movable with respect to the corresponding coupling spindle (4) for permitting the front wheels of the towed vehicle (2) to be raised, and in that the active length (L') between the rear axle (7) of the leading towing vehicle (1) and the free end (3a, 33a, 113a) of the drawbar in an outerly protruding towing position is adjusted between ¾ and one time the distance (D) between said rear axle (7) and the coupling spindle (4) of the towing vehicle (1).

15. Vehicle according to claim 13 or 14, characterized in that the drawbar is such as defined in the towing system according to one of claims 2 to 8.

16. Vehicle according to claim 13 or 14, characterized in that it comprises vertical raising means (12) operatively associated with the spindle or with the drawbar for producing at least two raising magnitudes (H1, H2).

17. Vehicle according to one of claims 13 to 16, characterized in that it comprises means (18, 115) for adjusting the active length (L) of the drawbar and means (13, 116) for locking the drawbar in the rest and towing position, respectively.
